# EUROPÄISCHE PATENTSCHRIFT

(11) **EP 0 568 571 B1**
(45) Veröffentlichungstag und Bekanntmachung des Hinweises auf die Patenterteilung: **14.12.1994**
(21) Anmeldenummer: 92903234.0
(22) Anmeldetag: 21.01.1992
(51) Int. Cl.: F16H 59/02

(54) **SCHALT- UND FAHRBEREICHSWÄHLEINRICHTUNG FÜR EIN HALB- ODER VOLLAUTOMATISCH SCHALTBARES ZAHNRÄDERWECHSELGETRIEBE EINES KRAFTFAHRZEUGS**
GEAR AND GEAR-RANGE SELECTOR FOR A SEMI-AUTOMATIC OR FULLY AUTOMATIC VEHICLE GEARBOX
DISPOSITIF DE COMMUTATION ET DE SELECTION DE RAPPORTS DE TRANSMISSION POUR UNE BOITE DE VITESSES A ENGRENAGES SEMI- OU ENTIEREMENT AUTOMATIQUE D'UN VEHICULE AUTOMOBILE

(30) Priorität: 22.01.1991 DE 4101672
(43) Veröffentlichungstag der Anmeldung: 10.11.1993
(73) Patentinhaber: ZF FRIEDRICHSHAFEN Aktiengesellschaft, 88038 Friedrichshafen (DE)
(72) Erfinder: SCHWAB, Manfred, D-88069 Tettnang (DE); SCHWEIGER, Klaus, D-7990 Friedrichshafen (DE)
(86) Internationale Anmeldenummer: EP9200118
(87) Internationale Veröffentlichungsnummer: WO9213215

(56) Entgegenhaltungen:
- EP-A- 0 121 167
- EP-A- 0 353 310
- DE-A- 3 717 675
- DE-A- 4 006 653

## Beschreibung

Die Erfindung bezieht sich auf eine Schalt- und Fahrbereichswähleinrichtung für ein halb- oder vollautomatisch schaltbares Zahnräderwechselgetriebe eines Kraftfahrzeugs entsprechen den im Oberbegriff von Anspruch 1 bzw. 3 aufgeführten Merkmalen.

Eine Schalt- und Fahrbereichswähleinrichtung der vorgenannten Gattung ist bekannt aus der DE-A 40 06 653. Die Fahrbereichswähleinrichtung, mit der vom Fahrer unterschiedliche Schaltabläufe vorwählbar sind, wie z. B. ein vollautomatischer Betrieb, ein manueller Betrieb, eine Rückwärtsfahrtstellung, eine Neutralstellung usw., ist wahlweise als Dreh- oder Tastenschalter ausgebildet. Die Schalteinrichtung, über die vom Fahrer im manuellen oder halbautomatischen Betrieb des Zahnräderwechselgetriebes Schaltbefehle an ein elektronisches Steuergerät abgegeben werden, ist als Lenkradschalter oder als von Hand bedienbarer Konsolenschalter ausgeführt. Vom Steuergerät wird aus Drehzahl-, Last- und Beschleunigungswerten in Verbindung mit dem Motorkennfeld der für den jeweiligen Fahrzustand günstigste Gang ermittelt und dem Fahrer optisch angezeigt. Durch eine Betätigung der Schalteinrichtung in einer erster Bewegungsebene löst der Fahrer die Schaltung des empfohlenen Ganges aus. Bewegt er die Schalteinrichtung in einer zweiten Bewegungsebene, die quer zur ersten Bewegungsebene verläuft, so werden manuelle Auf- bzw. Abwärtsschaltungen des Zahnräderwechselgetriebes um einzelne Gangstufen ausgelöst. Darüber hinaus können Rückschaltungen des Getriebes noch mit Hilfe eines am Gaspedal vorgesehenen Kick-down-Schalters ausgelöst werden. Der Nachteil dieser Einrichtung besteht darin, daß die Bedienung der als Lenkrad- oder Konsolenschalter ausgebildeten Schalteinrichtung eine besondere Aufmerksamkeit des Fahrers erforderlich macht, wobei nicht beide Hände am Lenkrad verbleiben können.

Es ist daher Aufgabe der vorliegenden Erfindung, eine Schalt- und Fahrbereichswähleinrichtung zu schaffen, deren Bedienung einfach ist und dem Fahrer die Möglichkeit gibt, sich völlig auf den Verkehr zu konzentrieren.

Diese Aufgabe wird an einer Schalt- und Fahrbereichswähleinrichtung der vorgenannten Gattung durch die im kennzeichnenden Teil des Anspruchs 1 bzw.3 aufgeführten Merkmale gelöst.

Mit diesem Fußschalter können je nach der Stellung der Fahrbereichswähleinrichtung manuelle Schaltungen um einzelne Gangstufen oder automatische Schaltungen in die von der Steuerelektronik als optimal ausgewertete Gangstufe ausgelöst werden. Der Fahrer kann sich dabei völlig auf das Verkehrsgeschehen konzentrieren und kann während einer manuellen Schaltung oder der Auslösung einer Schaltung in einen automatisch vorgewählten Gang beide Hände am Lenkrad belassen.

Aus der Druckschrift DE-A 37 17 675 ist eine kombinierte Schalt- und Fahrbereichswähleinrichtung mit einem in zwei Schaltgassen bewegbaren Wählhebel bekannt. In der einen Schaltgasse können Wählpositionen für einen vollautomatischen Betrieb, Hochschaltbegrenzungsstufen sowie jeweils eine Park-, Rückwärtsgang- und Neutralstellung des Zahnräderwechselgetriebes vorgewählt werden. Der Wählhebel kann über eine Quergasse in die zweite Schaltgasse bewegt werden, in welcher das Zahnräderwechselgetriebe schrittweise von Hand herauf- bzw. heruntergeschaltet wird. Die manuelle Schaltung des Zahnräderwechselgetriebes erfordert ebenfalls eine erhöhte Aufmerksamkeit des Fahrers, wobei er während dieses Vorgangs das Fahrzeug nurmehr mit einer Hand lenken kann.

Aus der Druckschrift SAE Technical Paper Series 831776 "Automated Mechanical Transmission Controls", November 7 bis 10, 1983, Seiten 2, 6 und 7 ist ebenfalls eine kombinierte Fahrbereichswähl- und Schalteinrichtung bekannt, die einen in einer in Fahrzeuglängsrichtung verlaufenden Gasse bewegbaren Wählhebel aufweist. Zu diesen Wählstellungen gehört eine Stellung für einen manuellen Betrieb des Zahnräderwechselgetriebes, in der die von der Automatik zuletzt geschaltete Gangstufe beibehalten wird. In der Manuellstellung kann der Wählhebel in zwei unterschiedlichen Richtungen quer zu der Wählgasse von Hand bewegt werden, wodurch das Zahnräderwechselgetriebe schrittweise herauf- bzw. heruntergeschaltet wird. Auch bei dieser Vorrichtung muß der Fahrer am Wählhebel die entsprechende Position suchen, in der eine manuelle Fortschaltung des Zahnräderwechselgetriebes möglich ist, so daß seine Aufmerksamkeit vom Straßenverkehr abgelenkt ist. Da der Fahrer die entsprechenden Schaltungen von Hand ausführen muß, können nicht beide Hände am Lenkrad verbleiben.

In der einen Alternative gemäß Anspruch 1 weist der Fußschalter eine Schaltwippe auf, die um eine horizontale Schwenkachse bewegbar ist und deren Wippenhälften jeweils mit Kontakten für ein Herauf- bzw. Herunterschalten zusammenwirken. In diesem Zusammenhang ist nach Anspruch 2 vorgesehen, die Schaltwippe mit quer zur Fahrtrichtung des Kraftfahrzeugs verlaufender Schwenkachse anzuordnen, so daß der Fahrer mit seiner Fußspitze an der vorderen Wippenhälfte Hochschaltungen und mit seiner Hacke an der hinteren Wippenhälfte Rückschaltungen auslöst. Die Schaltwippe kann dabei so ausgebildet sein, daß der Fahrer jeweils durch ein haptisches Signal spürt, daß der Schaltbefehl von dem elektronischen Steuergerät angenommen wurde. Außerdem kann die Schaltwippe mit Mitteln versehen sein, die die Schaltwippe nach jedem Schaltbefehl zunächst in ihre Neutralstellung zurückkehren lassen, bevor ein weiterer Schaltbefehl eingegeben wird.

In der anderen Alternative nach dem unabhängigen Anspruch 3 alternativ zu der Lehre der Ansprüche 1 und 2 der Fußschalter als Druckschalter ausgebildet, wobei über ein Zeitglied die Betätigungsdauer des Druckschalters ermittelt und diese einem gewünschtem Herauf- oder Herunterschalten zugeordnet wird. Dabei könnte beispielsweise durch kurzes Antippen des Druckschalters heruntergeschaltet werden, während eine längeres Halten des Druckschalters in seiner Betätigungsstellung zu einem Heraufschalten des Zahnräderwechselgetriebes führt.

Gemäß Anspruch 4 soll die Fahrbereichswähleinrichtung einen in einer Wählgasse bewegbaren Wählhebel aufweisen, wobei der Wählhebel in der Wählgasse Stellungen für einen vollautomatischen Betrieb AS, einen manuellen Betrieb M, einen Betrieb ASM, in welchem bei Betätigung des Fußschalters direkt in eine durch eine elektrische Auswahlschaltung ermittelte optimale Gangstufe geschaltet wird, für eine Stellung Neutral N sowie für einen Rückwärtsfahrbereich R aufweist. Das Kraftfahrzeug wird dabei im wesentlichen in den Stellungen vollautomatischer Betrieb AS, Betrieb mit direkter Schaltung in eine optimale Gangstufe ASM und manueller Betrieb M betrieben, wobei diese Stellungen vorzugsweise einander benachbart sind, so daß nur kurze Betätigungswege des Wählhebels und eine geringe Aufmerksamkeit des Fahrers bei diesem Wählvorgang erforderlich sind.

In diesem Zusammenhang kann, wie in Anspruch 5 vorgeschlagen, die Wählgasse L-förmig ausgebildet sein, wobei die Stellungen für vollautomatischen und manuellen Betrieb, Schaltung des optimalen Ganges sowie Neutral entsprechend aufeinanderfolgend in einer gemeinsamen Wählgasse angeordnet sind und wobei eine Stellung für den Rückwärtsfahrbereich am Ende einer sich daran anschließenden Quergasse angeordnet ist. Somit sind die Vorwärts- und Rückwärtsfahrbereiche voneinander getrennt, und es können daher Fehlbedienungen vermieden werden. Die erste Wählgasse, der die Vorwärtsfahrtstellungen zugeordnet sind, kann gemäß Anspruch 7 im Kraftfahrzeug quer zu dessen Fahrtrichtung angeordnet sein.

In weiterer Ausgestaltung der Erfindung soll gemäß Anspruch 7 mit dem Fußschalter in einer Rückwärtsfahrstellung der Fahrbereichswähleinrichtung manuell eine Schaltung des Rückwärtsganges auslösbar sein. Dieser Rückwärtsgang des Zahnräderwechselgetriebes kann nur im Stillstand des Kraftfahrzeugs geschaltet werden, und es wird zweckmäßigerweise über eine Sicherheitseinrichtung die Ausgabe dieses Schaltbefehls vom elektronischen Steuergerät so lange unterdrückt, wie das Kraftfahrzeug vorwärts fährt.

Weiterhin kann gemäß Anspruch 8 das Zahnräderwechselgetriebe durch eine einmalige Betätigung des Fußschalters im vollautomatischen Betrieb um eine Gangstufe zurückgeschaltet werden. Eine derartige Ausbildung der Vorrichtung hat den Vorteil, daß vor Überholvorgängen und vor dem Befahren von Steigungen ohne besonderen Schaltaufwand das Zahnräderwechselgetriebe um eine Gangstufe heruntergeschaltet werden kann. Diese Rückschaltung kann dem Anspruch 9 zufolge durch nochmalige Betätigung des Fußschalters oder nach einer Zeitfunktion aufgehoben werden.

Zur weiteren Erläuterung der Erfindung wird auf die Zeichnung verwiesen, in der ein Ausführungsbeispiel vereinfacht dargestellt ist.

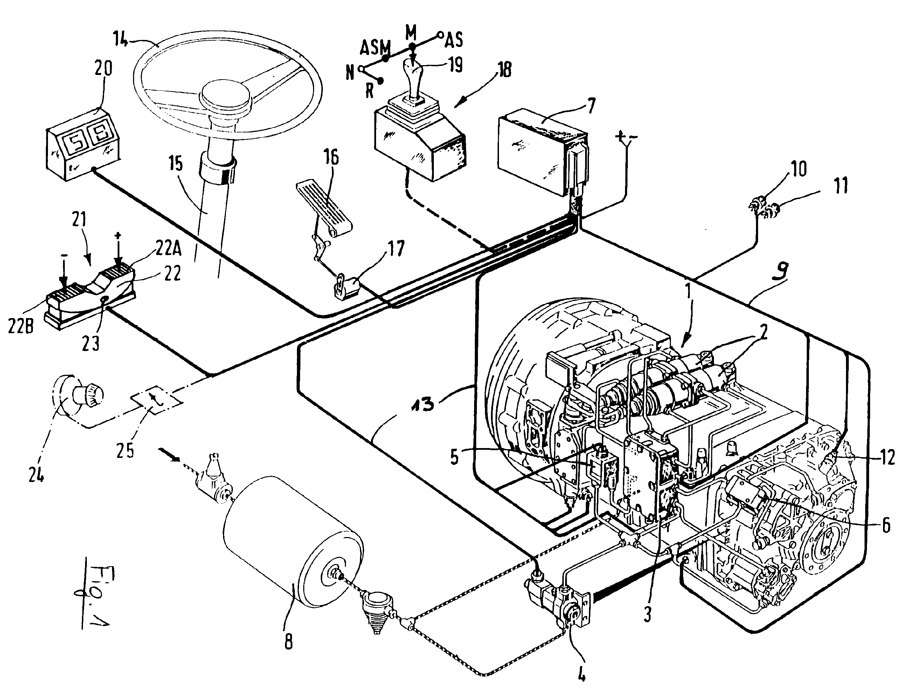

In der einzigen Fig. 1 ist mit 1 ein Zahnräderwechselgetriebe bezeichnet, das in Vorgelege- oder Planetenbauweise ausgebildet sein kann. Dieses Zahnräderwechselgetriebe wird von einer nicht näher bezeichneten Brennkraftmaschine angetrieben, wobei bei dessen Ausbildung in Vorgelegebauweise zwischen der Brennkraftmaschine und dem Zahnräderwechselgetriebe 1 eine automatisierte Fahrkupplung angeordnet sein soll. Das Zahnräderwechselgetriebe 1 weist für seine Gangschaltung Schaltzylinder 2 auf, die mit im Inneren des Zahnräderwechselgetriebes 1 angeordneten Schaltkupplungen zusammenwirken. Diesen Schaltzylindern 2 sowie weiteren, in der Zeichnung nicht dargestellten Schalt- bzw. Wählzylindern sind Magnetventile 3, ein Hauptschaltventil 4 sowie Schaltventile 5 und 6 zugeordnet. Diese Ventile 3 bis 6 werden elektrisch von einem elektronischen Steuergerät 7 angesteuert. In einem pneumatischen Speicher bzw. Druckkessel 8 wird Druckluft zur Verfügung gestellt, die über die elektrisch angesteuerten Ventile 3 bis 6 den Schaltzylindern 2 zugeführt wird. Selbstverständlich kann anstelle von Druckluft als Betätigungsmittel auch eine Hydraulikflüssigkeit vorgesehen sein.

Eine an das elektronische Steuergerät 7 angeschlossene elektrische Leitung 9 überträgt Meßwerte und Schaltsignale an das elektronische Steuergerät 7, wobei an diese elektrische Leitung 9 Drehzahlsensoren angeschlossen sind, und zwar ein Drehzahlsensor 10 zur Bestimmung der Drehzahl der Brennkraftmaschine, ein Drehzahlsensor 11 für eine Getriebeeingangsdrehzahl und ein Drehzahlsensor 12 für eine Getriebeausgangsdrehzahl. Über eine weitere elektrische Leitung 13 gibt das elektronische Steuergerät 7 Schaltbefehle an die Ventile 3 bis 6 ab.

In einem Führerhaus oder einer Fahrgastzelle des Kraftfahrzeugs ist ein Lenkrad 14 mit Lenksäule 15 angeordnet. Weiterhin befindet sich im Fußraum dieses Führerhauses ein Gas- bzw. Fahrpedal 16, das als Lastgeber eine nicht dargestellte Drosselklappe bei Otto-Motoren oder eine Regelstange einer Einspritzpumpe bei Diesel-Motoren verstellt. Das Gas- oder Fahrpedal 16 kann direkt mechanisch an die Drosselklappe oder Regelstange gekoppelt sein oder es ist eine elektronische Koppelung (E-Gas) vorgesehen. Das Gaspedal 16 wirkt außerdem mit einem Kick-down-Schalter 17 zusammen, der bei einer schnellen Betätigung des Gaspedals 16 über das elektronische Steuergerät 7 eine Rückschaltung des Zahnräderwechselgetriebes 1 auslöst.

Weiterhin ist im Führerhaus des Kraftfahrzeugs eine als Konsolenschalter ausgebildete Fahrbereichswähleinrichtung 18 angeordnet, deren Wählhebel 19 zum Vorwählen bestimmter Fahrprogramme dient. In der Zeichnung ist oberhalb dieses Wählhebels 19 ein L-förmiger Gassenverlauf dargestellt, dem Fahrbereichsstellungen AS für einen vollautomatischen Betrieb, M für einen manuellen Betrieb, ASM für einen Betrieb mit direkter Schaltung in einen durch eine Auswahlschaltung des elektronischen Steuergeräts 7 ausgewählte optimale Gangstufe, N für eine Neutralstellung und R für eine Rückwärtsfahrtstellung zugeordnet sind.

Über eine Anzeigevorrichtung 20, die ebenfalls mit dem elektronischen Steuergerät 7 verbunden ist, wird der gerade eingelegte Gang des Zahnräderwechselgetriebes 1 angezeigt, und es wird in der Stellung ASM des Wählhebels 19 parallel dazu eine empfohlene optimale Gangstufe angezeigt.

Ebenfalls im Führerhaus des Kraftfahrzeugs ist in dessen Fußraum eine Schalteinrichtung 21 angeordnet. Diese Schalteinrichtung 21, die vom Fahrer mit dem linken Fuß bedienbar ist, steht ebenfalls in Verbindung mit dem elektronischen Steuergerät 7 und löst in der Stellung M für manuellen Betrieb der Fahrbereichswähleinrichtung 18 durch eine unterschiedliche Bedienung ein stufenweises Herauf- bzw. Herunterschalten des Zahnräderwechselgetriebes 1 aus. In der Zeichnung sind zwei unterschiedliche Varianten der Schalteinrichtung 21 dargestellt.

Nach einem ersten Vorschlag soll die Schalteinrichtung 21 eine Schaltwippe 22 aufweisen, die eine mittige Schwenkachse 23 hat. Wird die Schaltwippe an einer Wippenhälfte 22A vom Fahrer getreten, so führt ein entsprechendes Schließen eines nicht dargestellten Kontakts zu einem Heraufschalten des Zahnräderwechselgetriebes 1 um eine Gangstufe. In entsprechender Weise wird beim Treten einer Wippenhälfte 22B das Zahnräderwechselgetriebe 1 um eine Gangstufe heruntergeschaltet.

Befindet sich der Wählhebel 19 der Fahrbereichswähleinrichtung 18 in der Stellung ASM, so wird ebenfalls die Schaltung in einen von der Auswahlschaltung als optimal angesehenen Gang durch Betätigung der Schaltwippe 22 geschaltet. Wird das Zahnräderwechselgetriebe 1 in der Stellung AS des Wählhebels 19 vollautomatisch aufgrund von Drehzahl- und Lastsignalen gesteuert, so kann der Fahrer willkürlich diese Steuerung für eine bestimmte Zeitdauer vor Überholvorgängen oder beim Befahren von Steigungen unterbrechen. Er muß in diesem Fall nur kurzzeitig die Schalteinrichtung 21 betätigen, dann wird das Zahnräderwechselgetriebe um eine Gangstufe zurückgeschaltet. Nach einer bestimmten Zeitdauer wird dieser Betriebszustand der Steuereinrichtung wieder selbsttätig aufgehoben oder es kann vorgesehen sein, diesen Betriebszustand durch nochmaliges Treten der Schaltwippe aufzuheben.

In der Zeichnung ist eine weitere mögliche Variante des Fußschalters, also der Schalteinrichtung 21 strichpunktiert dargestellt. Es handelt sich dabei um einen Druckschalter 24, der über ein Zeitglied 25 mit dem elektronischen Steuergerät 7 verbunden ist. Je nach Betätigungsdauer des Druckschalters 24, die ermittelt wird vom Zeitglied 25, wird festgestellt, ob es sich um eine gewünschte Hochschaltung oder eine gewünschte Rückschaltung des Zahnräderwechselgetriebes 1 handelt.

Der Zeichnung ist zu entnehmen, daß mit der als Fußschalter 22 bzw. 24 ausgebildeten Schalteinrichtung 21 vom Fahrer auf einfache Weise, ohne daß er vom konzentrierten Fahren abgelenkt wird, Schaltbefehle an das elektronische Steuergerät 7 abgegeben werden können. Dabei ist von besonderem Vorteil, daß die Fahrbereichswähleinrichtung 18 separat als Konsolenschalter angeordnet ist, über den keine Schaltbefehle abgegeben werden. Eine Kombination von Schalteinrichtung 21 und Fahrbereichswähleinrichtung 18 innerhalb eines Bedienungshebels führt nämlich erfahrungsgemäß häufig zu Fehlbedienungen und erfordert eine hohe Aufmerksamkeit des Fahrers.

## Patentansprüche

1. Schalt- und Fahrbereichswähleinrichtung (21, 18) für ein halb- oder vollautomatisch schaltbares Zahnräderwechselgetriebe (1) eines Kraftfahrzeugs, bei welcher mittels der Fahrbereichswähleinrichtung (18) ein Fahrbereich einstellbar ist, in dem das Zahnräderwechselgetriebe (1) manuell über die Schalteinrichtung (2) um einzelne Gangstufen herauf- bzw. heruntergeschaltet werden kann, dadurch **gekennzeichnet**, daß als Schalteinrichtung (21) im Fußraum des Kraftfahrzeugs ein Fußschalter (22) angeordnet ist, der als Schaltwippe (22) mit einer horizontalen Schwenkachse (23) ausgebildet ist, deren Wippenhälften (22A und 22B) jeweils mit Kontakten für ein Herauf- bzw. Herunterschalten zusammenwirken.

2. Schalt- und Fahrbereichswähleinrichtung (21, 18) nach Anspruch 1, dadurch **gekennzeichnet**, daß die Schaltwippe (22) mit quer zur Fahrtrichtung des Kraftfahrzeugs verlaufender Schwenkachse (23) angeordnet ist und daß der Fahrer mit seiner Fußspitze an der vorderen Wippenhälfte Hochschaltungen und mit seiner Hacke an der hinteren Wippenhälfte Herunterschaltungen auslöst.

3. Schalt- und Fahrbereichswähleinrichtung (21, 18) nach dem Oberbegriff von Anspruch 1, dadurch **gekennzeichnet**,
- daß als Schalteinrichtung (21) im Fußraum des Kraftfahrzeugs ein Fußschalter (24) angeordnet ist,
- daß der Fußschalter als Druckschalter (24) ausgebildet ist, wobei über ein Zeitglied (25) die Betätigungsdauer des Druckschalters (24) ermittelt und diese einem gewünschten Herauf- oder Herunterschalten zugeordnet wird.

4. Schalt- und Fahrbereichswähleinrichtung (21, 18) nach Anspruch 1 oder 3, dadurch **gekennzeichnet**, daß die Fahrbereichswähleinrichtung (18) einen in einer Wählgasse bewegbaren Wählhebel (19) aufweist, wobei der Wählhebel (19) in der Wählgasse Stellungen für einen vollautomatischen Betrieb AS, einen manuellen Betrieb M, einen Betrieb, in welchem bei Betätigung des Fußschalters (22 oder 24) direkt in eine durch eine elektrische Auswahlschaltung ermittelte optimale Gangstufe geschaltet wird, Neutral N sowie einen Rückwärtsfahrbereich R aufweist.

5. Schalt- und Fahrbereichswähleinrichtung (21, 18) nach Anspruch 4, dadurch **gekennzeichnet**, daß die Wählgasse einen L-förmigen Verlauf hat, wobei die Stellungen für vollautomatischen und manuellen Betrieb AS sowie M Schaltung des optimalen Ganges ASM sowie Neutral N entsprechend aufeinanderfolgend in einer gemeinsamen Wählgasse angeordnet sind und wobei eine Stellung für den Rückwärtsfahrbereich R am Ende einer sich daran anschließenden Quergasse angeordnet ist.

6. Schalt- und Fahrbereichswähleinrichtung (21, 18) nach Anspruch 5, dadurch **gekennzeichnet**, daß die erste Wählgasse im Kraftfahrzeug quer zu dessen Fahrtrichtung angeordnet ist.

7. Schalt- und Fahrbereichswähleinrichtung (21, 18) nach Anspruch 1 oder 3, dadurch **gekennzeichnet**, daß mit dem Fußschalter (22 oder 24) in einer Rückwärtsfahrstellung R der Fahrbereichswähleinrichtung (18) manuell eine Schaltung des Rückwärtsganges auslösbar ist.

8. Schalt- und Fahrbereichswähleinrichtung (21, 18) nach Anspruch 1 oder 3, dadurch **gekennzeichnet**, daß das Zahnräderwechselgetriebe (1) mit dem Fußschalter (22 oder 24) in einer Stellung AS des Fahrbereichschalters (18) für vollautomatischen Betrieb um eine Gangstufe zurückschaltbar ist.

9. Schalt- und Fahrbereichswähleinrichtung (21, 18) nach Anspruch 8, dadurch **gekennzeichnet**, durch nochmalige Betätigung des Fußschalters (22 oder 24) oder nach einer Zeitfunktion aufhebbar ist.

## Claims

1. Gear and gear-range selector (21, 18) for a semi-automatic or fully automatic vehicle gearbox (1), with which by means of the gear-range selector (18) a gear range is capable of being adjusted in which the gearbox (1) can be shifted manually up or down by individual gears via the shift device (2), characterised in that by way of gear-shift control (21) a foot-operated switch (22) is arranged in the footwell of the vehicle, said foot-operated switch being designed as a rocker switch (22) with a horizontal pivotal axis (23), the rocker halves (22A and 22B) of which interact with contacts for shifting up and down respectively.

2. Gear and gear-range selector (21, 18) according to Claim 1, characterised in that the rocker switch (22) is arranged with a pivotal axis (23) running transverse to the direction of travel of the vehicle and in that the driver triggers up-shifts with his toes on the front half of the rocker switch and triggers down-shifts with his heel on the rear half of the rocker.

3. Gear and gear-range selector (21, 18) according to the preamble to Claim 1, characterised in that
- a foot-operated switch (24) is arranged in the footwell of the vehicle by way of gear-shift control (21),
- the foot-operated switch is designed as a pressure switch (24), whereby the duration of actuation of the pressure switch (24) is ascertained by means of a timer (25) and said duration is assigned to a desired up-shift or down-shift.

4. Gear and gear-range selector (21, 18) according to Claim 1 or 3, characterised in that the gear-range selector (18) exhibits a selector lever (19) which is capable of being moved in a selector channel, whereby the selector lever (19) in the selector channel exhibits positions for fully automatic operation AS, manual operation M, operation in which upon actuation of the foot-operated switch (22 or 24) shifting is effected directly into an optimal gear ascertained by an electrical selector circuit, neutral N, and a reverse gear range R.

5. Gear and gear-range selector (21, 18) according to Claim 4, characterised in that the selector channel is L-shaped, whereby the positions for fully automatic and manual operation AS and M, shifting of the optimal gear ASM and also neutral N are suitably arranged in sequence within a common selector channel and whereby a position for the reverse gear range R is arranged at the end of a transverse channel adjacent thereto.

6. Gear and gear-range selector (21, 18) according to Claim 5, characterised in that the first selector channel is arranged in the vehicle in a direction transverse to the direction of travel thereof.

7. Gear and gear-range selector (21, 18) according to Claim 1 or 3, characterised in that a shift of the reverse gear is capable of being triggered manually with the foot-operated switch (22 or 24) in a reverse setting R of the gear-range selector (18).

8. Gear and gear-range selector (21, 18) according to Claim 1 or 3, characterised in that the gearbox (1) is capable of being shifted down one gear with the foot-operated switch (22 or 24) in a position AS of the gear-range switch (18) for fully automatic-operation operation.

9. Gear and gear-range selector (21, 18) according to Claim 8, characterised in that the down-shift of the gearbox (1) is capable of being cancelled by further actuation of the foot-operated switch (22 or 24) or in accordance with a time function.

## Revendications

1. Dispositif (21, 18) de changement de vitesses et de sélection de mode de marche d'une boîte de vitesses à engrenages semi-automatique ou entièrement automatique (1) d'un véhicule à moteur, avec lequel il est possible d'enclencher au moyen du dispositif de sélection de mode (18) un mode de marche dans lequel des changements d'une vitesse à l'autre vers le haut ou vers le bas dans la boîte de vitesses (1) peuvent être commandés manuellement au moyen du dispositif de changement de vitesses (2), **caractérisé** en ce que le dispositif de changement de vitesses (21) comporte un organe de commande au pied (22), disposé dans la zone du plancher du véhicule et formé par un commutateur à bascule (22) à axe horizontal (23), dont des moitiés de bascule (22A et 22B) coopèrent respectivement avec des contacts pour changer les vitesses vers le haut ou vers le bas.

2. Dispositif (21, 18) selon la revendication 1, **caractérisé** en ce que le commutateur à bascule (22) est disposé de façon que son axe de basculement (23) soit transversal par rapport à la direction de marche du véhicule et en ce que le conducteur commande des changements de vitesses vers le haut par le bout de son pied sur la moitié avant de la bascule et des changements de vitesses vers le bas par son talon sur la moitié arrière de la bascule.

3. Dispositif (21, 18) selon le préambule de la revendication 1, **caractérisé** :
- en ce que le dispositif de changement de vitesses (21) comporte un organe de commande au pied (24), disposé dans la zone du plancher du véhicule,
- en ce que l'organe de commande au pied est formé par une commande à poussoir (24) où la durée d'actionnement de la commande à poussoir (24) est détectée au moyen d'un élément de temporisation (25) et détermine un changement de vitesses voulu soit vers le haut, soit vers le bas.

4. Dispositif (21, 18) selon la revendication 1 ou 3, **caractérisé** en ce que le dispositif de sélection de mode (18) comporte un levier sélecteur (19) mobile dans un couloir de sélection où le levier sélecteur (19) comporte des positions pour un mode entièrement automatique AS, un mode manuel M, un mode dans lequel une vitesse optimale déterminée par un circuit électrique de sélection est enclenchée directement en cas d'actionnement de l'organe de commande au pied (22 ou 24), une position neutre N et un mode de marche arrière R.

5. Dispositif (21, 18) selon la revendication 4, **caractérisé** en ce que le couloir de sélection a un tracé en forme de L, dans lequel les positions pour le mode entièrement automatique AS, le mode manuel M, l'enclenchement de la vitesse optimale ASM et la position neutre N se trouvent dans cet ordre successif dans un couloir commun, une position pour le mode de marche arrière R se trouvant à la fin d'un couloir perpendiculaire se raccordant au couloir commun.

6. Dispositif (21, 18) selon la revendication 5, **caractérisé** en ce que le premier couloir de sélection est disposé transversalement par rapport à la direction de marche du véhicule.

7. Dispositif (21, 18) selon la revendication 1 ou 3, **caractérisé** en ce que, dans une position de marche arrière R du dispositif de sélection de mode (18), un enclenchement de la marche arrière peut être déclenché manuellement au moyen de l'organe de commande au pied (22 ou 24).

8. Dispositif (21, 18) selon la revendication 1 ou 3, **caractérisé** en ce que, dans une position de mode entièrement automatique AS du dispositif de sélection de mode (18), une rétrogradation d'une vitesse dans la boîte de vitesses (1) peut être commandée au moyen de l'organe de commande au pied (22 ou 24).

9. Dispositif (21, 18) selon la revendication 8, **caractérisé** en ce que la rétrogradation dans la boîte de vitesses (1) peut être supprimée au moyen d'un nouvel actionnement de l'organe de commande au pied (22 ou 24) ou selon une fonction du temps.
